# EUROPÄISCHE PATENTSCHRIFT

(11) **EP 4 225 975 B1**
(45) Veröffentlichungstag und Bekanntmachung des Hinweises auf die Patenterteilung: **03.07.2024**
(21) Anmeldenummer: 21819030.4
(22) Anmeldetag: 10.11.2021
(51) Int. Cl.: C25B 1/04, C25B 15/021, C25B 15/08

(54) **VERFAHREN ZUM BETREIBEN EINER ELEKTROLYSEVORRICHTUNG UND ELEKTROLYSEVORRICHTUNG**
ELECTROLYSIS DEVICE AND METHOD FOR OPERATING AN ELECTROLYSIS DEVICE
PROCÉDÉ DE FONCTIONNEMENT D'UN DISPOSITIF D'ÉLECTROLYSE ET DISPOSITIF D'ÉLECTROLYSE

(30) Priorität: 25.11.2020 DE 102020214812; 01.03.2021 EP 21159855
(43) Veröffentlichungstag der Anmeldung: 16.08.2023
(73) Patentinhaber: Siemens Energy Global GmbH & Co. KG, 81739 München (DE)
(72) Erfinder: TREMEL, Alexander, 91096 Möhrendorf (DE); WOLF, Erik, 91341 Röttenbach (DE)
(86) Internationale Anmeldenummer: PCT/EP2021/081247
(87) Internationale Veröffentlichungsnummer: WO 2022/112003

(56) Entgegenhaltungen:
- EP-A1- 3 572 557
- JP-A- H07 286 293
- US-A1- 2013 228 456
- US-A1- 2018 038 318
- US-A1- 2019 218 676

## Beschreibung

Die Erfindung betrifft ein Verfahren zum Betreiben einer Elektrolysevorrichtung und eine solche Elektrolysevorrichtung.

Die Elektrolyse erzeugt während des Prozesses der Wasserspaltung infolge von elektrischen Widerstandsverlusten Wärme. Diese Wärme muss abgeführt werden, um ein Überhitzen des Systems zu verhindern. Die Wärmeabfuhr erfolgt dabei i.d.R. von dem inneren Prozesswasserkreislauf, aus dem durch den Wasserspaltungsprozess Wasserstoffgas und Sauerstoffgas gewonnen werden, mit Hilfe eines Wärmeaustauschers auf einen weiteren Fluidkreislauf (z.B. einer Wasser-Glykol-Mischung). Dieser zweite Fluidkreislauf überträgt den Wärmestrom an die Umgebung (z.B. Luft, Flusswasser, Untergrund).

In der Regel ist der innere Prozesswasserkreislauf in zwei Kreisläufe aufgeteilt: einen O₂-seitigen Kreislauf und einen H₂-seitigen Kreislauf mit jeweils einem Wärmetauscher. Der Wärmestrom in jedem der Kreisläufe fällt bei einem relativ niedrigen Temperaturniveau von zw. 40°C und 70°C an. In Regionen mit hohen Umgebungstemperaturen (>30°C oder sogar >40°C) ist damit die Abgabe der Verlustwärme an die Umgebung ein großes Problem. In solchen Regionen lässt sich die Situation nur mit große Wärmeaustauschflächen ausgleichen. Ab einer bestimmten Umgebungstemperatur, insbesondere >40°C, ist es jedoch u.U. nicht mehr möglich, die Kühlleistung aufrecht zu erhalten.

Um in Regionen mit hoher Umgebungstemperatur eine effektive Kühlung des Elektrolysesystems zu ermöglichen, wird aktuell über eine sehr aufwendige und kostenintensive Kompressionskühlung ein vorgekühltes Fluid bereitgestellt ("Kühlschrankeffekt") bzw. es wird Wasser auf die Kühler eingedüst, um über Verdunstungseffekte einen zusätzlichen Kühleffekt zu erzeugen. Die hohen Anschaffungskosten bzw. die entstehenden Wasserverluste lassen Projekte in diesen Regionen nur schwer profitabel werden. Darüber hinaus trägt der erhebliche Energieverbrauch bei der Kompressionskühlung zu einer deutlichen Verschlechterung des Wirkungsgrades bei, was die Wirtschaftlichkeit weiter sinken lässt.

Aufgabe der Erfindung ist es daher, eine Elektrolysevorrichtung zu schaffen, bei der die Kühlung kostengünstig und technisch einfach zu realisieren ist, wobei die Elektrolysevorrichtung für den Betrieb sowohl bei hohen als auch bei niedrigen Umgebungstemperaturen geeignet ist. EP 3 572 557 A1, US 2013/0228456 A1, US 2019/0218676 A1, JP H07-286293 und US 2018/0038318 A1 offenbaren Elektrolysevorrichtungen mit Kühlvorrichtungen.

Erfindungsgemäß ist ein Verfahren zum Betreiben einer Elektrolysevorrichtung zum Zerlegen von Wasser mit folgenden Schritten:
- Bereitstellen wenigstens einer Elektrolyseeinheit, umfassend wenigstens eine Elektrolysezelle, mit wenigstens einer Eingangsöffnung für einen ersten Eduktstrom und mit wenigstens einer Ausgangsöffnung für einen ersten Produktstrom,
- Herstellen des ersten Produktstroms aus dem ersten Eduktstrom in der Elektrolyseeinheit,
- Trennen des Produktstroms in einen Wasserstrom und einen Gasstrom,
- Kühlen des Wasserstroms, indem er in wenigstens eine Kühlvorrichtung eingeleitet wird, in der die Wärme des Wasserstroms direkt an die Umgebung abgegeben wird, wobei die Kühlvorrichtung in einer schrägen Stellung zwischen Zulaufseite und gegenüber- und tieferliegender Ablaufseite angeordnet ist,
- Unterbrechen der Kühlung des Wasserstroms im Falle eines Abschaltens der Elektrolyseeinheit oder im Stand-By-Betrieb der Elektrolyseeinheit, und
- Erfassen der Umgebungstemperatur während des Stillstands oder des Stand-By-Betriebs und wenn die Umgebungstemperatur unterhalb 1 °C ist, Entleeren des Wasserstroms aus der Kühlvorrichtung in einen Flüssigkeitsspeicher, wobei die Kühlvorrichtung durch einen Höhenunterschied zwischen der Kühlvorrichtung und dem Flüssigkeitsspeicher entleert wird.

Die Aufgabe wird weiterhin erfindungsgemäß gelöst durch eine Elektrolysevorrichtung zum Zerlegen von Wasser umfassend:
- eine Elektrolyseeinheit, umfassend wenigstens eine Elektrolysezelle, mit wenigstens einer Eingangsöffnung für einen ersten Eduktstrom und mit wenigstens einer Ausgangsöffnung für einen ersten Produktstrom,
- wenigstens einen Gas-Wasser-Separator zum Trennen des Produktstroms in einen Wasserstrom und einen Gasstrom,
- eine Kühlvorrichtung zum Kühlen des Wasserstroms, die für eine direkte Abgabe der Wärme des Wasserstroms an die Umgebung ausgelegt ist, wobei die Kühlvorrichtung in einer schrägen Stellung zwischen Zulaufseite und gegenüber- und tieferliegender Ablaufseite angeordnet ist,
- eine Steuereinheit, die dafür ausgebildet ist, die Kühlung des Wasserstroms im Falle eines Abschaltens der Elektrolyseeinheit oder im Stand-By-Betrieb der Elektrolyseeinheit zu unterbrechen, und
- eine Temperaturmessvorrichtung zum Erfassen der Umgebungstemperatur während des Stillstands oder des Stand-By-Betriebs, wobei die Steuereinheit dafür eingerichtet ist, wenn die Umgebungstemperatur unterhalb 1 °C ist, den Wasserstrom (W) aus der Kühlvorrichtung in einen Flüssigkeitsspeicher zu entleeren, wobei die Kühlvorrichtung und der Flüssigkeitsspeicher durch einen Höhenunterschied zwischen der Kühlvorrichtung und dem Flüssigkeitsspeicher angeordnet sind.

Erfindungsgemäß wird die Elektrolyseverlustwärme mittels Wärmetauscher bzw. Kühlverrichtungen direkt aus dem Prozesswasserkreislauf und ohne ein weiteres Wärmeträgermedium gegen die Umgebung (Luft, Flusswasser, Untergrund, etc.) gekühlt. Es wird dabei auf einen weiteren Kühlfluid-Zwischenkreis verzichtet, d.h. das produktseitige Wasser, weiterhin auch als Prozesswasser bezeichnet, wird direkt gegen z.B. die Umgebungsluft gekühlt. Auch bei hohen Außentemperaturen ist eine ausreichend große Temperaturdifferenz zwischen Prozesswasser (50-60°C) und Außenluft (z.B. 40°C) vorhanden, wodurch eine effiziente Kühlung gewährleistet ist. Damit solche Kühlvorrichtungen eingesetzt werden können, müssen jedoch bestimmte technische Vorkehrungen getroffen werden. Die direkte Kühlung des Prozesswassers (ohne Frostschutzmittel, wie z.B. Glykol) führt allerdings zur Frostgefahr in der Kühlvorrichtung bzw. in den Leitungen, falls die Außentemperaturen unter den Gefrierpunkt von 0 °C fallen. Der zu kühlende Wasserstrom ist Reinstwasser und kann somit gefrieren, wobei durch die Volumenausdehnung das Kühlsystem beschädigt werden kann. Darüber hinaus muss das zu kühlende Prozesswasser in der Kühlervorrichtung auch bei Anlagenstillständen vor Frost geschützt werden. Insbesondere wird die Kühlvorrichtung vor Umwelteinflüssen geschützt, z.B. über eine Jalousie, eine frostsichere Einhausung (wie Gebäude), über Beheizung, über das Einbinden eines Wärmespeichers, etc. Im Stillstand der Elektrolysevorrichtung, wenn keine Kühlung erforderlich ist, jedoch die Umgebungstemperatur nahe 0 °C oder darunter liegt, wird daher die Kühlvorrichtung entleert und zwischengespeichert. Das Reinwasser aus der Kühlvorrichtung wird dabei für die Dauer des Stillstands der Elektrolyseeinheit in einem Flüssigkeitsspeicher (innenstehend oder isoliert bzw. beheizt bei Außenaufstellung) zwischengespeichert.

Gemäß der erfindungsgemäßen Ausführung wird die Kühlvorrichtung durch einen Höhenunterschied zwischen der Kühlvorrichtung und dem Flüssigkeitsspeicher entleert. Hierzu ist die Kühlvorrichtung in einer schrägen Stellung angeordnet, um damit den Entleervorgang zu vereinfachen. Dies bedeutet, dass eine Ablaufseite der Kühlvorrichtung, durch welche das Wasser entleert wird, tiefer liegt als die gegenüberliegende Zulaufseite. Die Ablaufseite bildet insbesondere der tiefste Punkt der Kühlvorrichtung.

Vorteilhafterweise wird das Wasser in der entleerten Kühlvorrichtung durch ein Gas ersetzt. Das Gas ist erforderlich zur Vermeidung eines Unterdrucks bzw. zur Aufrechterhaltung eines definierten Überdrucks im System, Das Gas könnte ein Prozessgas sein oder z.B. ein Inertgas.

Gemäß einer weiteren bevorzugten Ausführungsvariante, alternativ oder ergänzend zum Entleeren aufgrund des Höhenunterschieds, wird die Kühlvorrichtung durch Beaufschlagen mit einem unter Druck stehenden Gas, welches insbesondere ein Prozessgas ist, entleert. Hierzu kann insbesondere auf das bereits in der Elektrolysevorrichtung befindliche Produktgas, welches in der Regel in einem Gasspeicher gespeichert ist, zurückgegriffen werden. Auf der Anodenseite wird insbesondere Druckluft zur Verdrängung des Prozesswassers für den Kühlkreislauf verwendet.

Im Hinblick auf eine konstruktiv besonders einfache Ausführung wird als Flüssigkeitsspeicher bevorzugt der Gas-Wasser-Separator verwendet.

Alternativ oder ergänzend zur Nutzung des Gas-Wasser-Separators als Flüssigkeitsspeicher, insbesondere wenn das Volumen des Gas-Wasser-Separators nicht ausreichend ist, wird als Flüssigkeitsspeicher vorzugsweise ein zusätzlicher Behälter eingesetzt, der beispielsweise zwischen dem Gas-Wasser-Separator und der Kühlvorrichtung angeordnet ist.

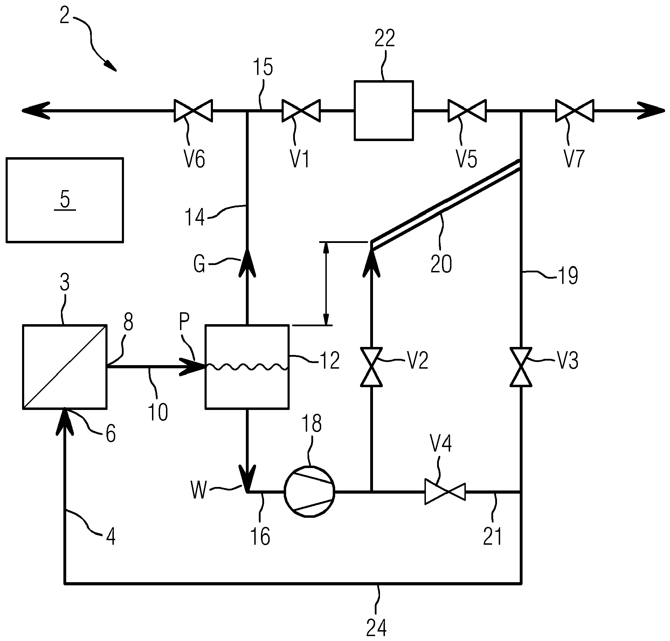

Ausführungsbeispiele der Erfindung werden anhand einer Zeichnung näher erläutert. Hierin zeigt die einzige Figur eine Elektrolysevorrichtung 2 (PEM- oder Alkali-Elektrolysevorrichtung) mit einer Elektrolyseeinheit 3 umfassend mindestens eine hier nicht näher gezeigte Elektrolysezelle zum Zerlegen von Wasser. Die Elektrolysevorrichtung 2 umfasst zudem eine Steuereinheit 5, die in der Figur symbolisch dargestellt ist. Die Steuereinheit 5 steuert die einzelnen Komponenten der Elektrolysevorrichtung 2 in Abhängigkeit von diversen hinterlegten, berechneten oder erfassten Parametern.

In die Elektrolyseeinheit 3 wird ein erster Eduktstrom 4 durch eine Eingangsöffnung 6 eingeführt. Die Elektrolyseeinheit 3 weist außerdem mindestens eine erste Ausgangsöffnung 8 für einen Produktstrom P, der aus dem Eduktstrom 4 in der Elektrolyseeinheit 3 hergestellt wird und über eine Produktleitung 10, die mit der Ausgangsöffnung 8 verbunden ist, aus der Elektrolyseeinheit 3 hinausgeführt wird. Der nachfolgend beschriebene Aufbau der Elektrolysevorrichtung 2 kann sowohl kathoden- als auch anodenseitig vorgesehen sein. Insbesondere ist dar in der Figur gezeigte Aufbau kathoden- und anodenseitig vorhanden, obwohl durch eine Seite dargestellt ist.

Der Produktstrom P stellt ein Fluidgemisch dar, bestehend aus einer Flüssigkeit, in diesem Fall Wasser, und einem Gas (Wasserstoff auf der Kathodenseite, Sauerstoff auf der Anodenseite). Nach dem Ableiten des Produktstroms P aus der Elektrolyseeinheit 3 wird dieser in einem Gas-Wasser-Separator 12 in einen Gasstrom G und einen Wasserstrom W geteilt. Der Gas-Wasser-Separator 12 kann unter Druck arbeiten, jedoch ist auch eine drucklose Ausführung möglich, bei der die Trennung des Gases von der Flüssigkeit (Wasser) durch die Schwerkraft erfolgt.

Der Gasstrom G wird über die Gasleitung 14 im geöffneten Zustand des Ventils V6, welches in der Gasleitung 14 eingebaut ist, zu einer nicht gezeigten Gasabnahme weitergeleitet und verlässt die Elektrolysevorrichtung 2. Hierzu bleibt ein Ventil V1, welches in einer Abzweigung 15 der Gasleitung 14 integriert ist, geschlossen. Beim geöffneten Zustand des Ventils V1 wird das Gas in einen Gasspeicher 22, in den die Leitung 15 mündet, hineingeleitet.

Der vom Gasstrom G separierte Wasserstrom W wird über eine Wasserleitung 16 mit Hilfe einer Zirkulationspumpe 18 über ein geöffnetes Ventil V2 in eine Kühlvorrichtung 20 (Wärmetauscher) gefördert und gibt dort seine Wärme direkt an die Umgebung ab.

Über eine Rezirkulationsleitung 19 bei einem geöffneten Ventil V3 gelangt der Wasserstrom W nach der Kühlvorrichtung 20 zurück zur Elektrolyseeinheit 3, um gekühlt erneut am Elektrolyseprozess teilzunehmen.

Zur Aufnahme des aus der Kühlvorrichtung 20 kommenden Fluides kann an Stelle des druckfesten Gas-Wasser-Separators 12 ein Vorratsbehälter mit niedrigem Druck bzw. drucklos verwendet werden, wobei eine Wasserpumpe das zwischengelagerte Wasser W in den Kühlkreislauf fördert.

Mit Hilfe der Bypass-Leitung 24 mit dem Ventil V4 kann die Kühlvorrichtung 20 teilweise bis vollständig umgangen werden. Die Bypass-Leitung 24 dient der Regelung der Fluidtemperatur am Eintritt der Elektrolyseeinheit 3. Die in der Figur gezeigte Position des Ventils V4 stellt nur eine von vielen möglichen Ausführungen dar: es kann z.B. vor dem Ventil V2, nach dem Ventil V3, nach dem Ventil V2 oder zwischen den Ventilen V2 und V3 angeordnet sein. V4 ist regelbar in Abhängigkeit der Temperatur des Prozesswassers, dient aber auch zum Anfahren bzw. Vorwärmen der Elektrolysevorrichtung 2. Auch eine temperaturabhängige Regelung der Ventile V2 und V3 ist denkbar.

Im Falle eines Abschaltens der Elektrolyseeinheit 3 oder im Stand-By-Betrieb bei einer sehr niedrigen Leistung der Elektrolyseeinheit 3 ist eine Kühlung des Prozesswassers W nicht mehr erforderlich. Dessen Kühlung in der Kühlvorrichtung 20 wird daher unterbrochen. Gleichzeitig wird über eine hier nicht näher gezeigte Temperaturmessvorrichtung die Umgebungstemperatur erfasst. Wenn die Umgebungstemperatur nahe am Gefrierpunkt ist oder darunter liegt, d.h. unterhalb 1°C ist, kann das Prozesswasser W jedoch einfrieren und somit die Elektrolysevorrichtung 2 beschädigen. Aus diesem Grund wird die Umgebungstemperatur erfasst und, wenn diese nahe am Gefrierpunkt ist, d.h. unterhalb von 1°C liegt, sorgt die Steuereinheit (5) dafür, dass die Kühlvorrichtung 20 und ggf. Teile der Zu- und Ableitungen entwässert werden.

Eine Möglichkeit dafür besteht in einer forcierten "Entwässerung" mit Druckgas, indem das Gas aus dem Gasspeicher 22 dafür verwendet wird. In einem ersten Schritt wird das Ventil V1 geöffnet und Druckgas aus dem produktseitigen Gasstrom 14 gelangt in den Gasspeicher 22. Zu diesem Zeitpunkt ist ein dem Gasspeicher 22 nachgeschaltetes Ventil V5 geschlossen.

Nach Beladung des Gasspeichers 22 (druckabhängige und/oder zeitabhängige Regelung bzw. Steuerung) wird das Ventil V1 geschlossen. Die Gasproduktion ist zu diesem Zeitpunkt gestoppt und eine Kühlung ist nicht mehr erforderlich. Über das Ventil V6 erfolgt eine teilweise oder gar vollständige Druckentlastung der Elektrolysevorrichtung 2. Zudem verdrängt das Gas aus dem Gasspeicher 22 das Wasser W aus der Kühlvorrichtung 20, das über die Elektrolyseeinheit 3 in den Gas-Wasser-Separator 12 gelangt und zunächst dort gelagert wird. Alternativ oder ergänzend dazu, wenn das Volumen des Gas-Wasser-Separators 12 zu gering ist, kann ein zusätzlicher Behälter zur Flüssigkeitsaufnahme verwendet werden. Dieser könnte für einen niedrigeren Druck ausgelegt sein. Bei kleinen, freien Volumen im Gas-Wasser-Separator 12 kann es zu einem Druckanstieg durch die einströmende Flüssigkeit kommen. In diesem Fall wird das Ventil V6 als Funktion des Drucks zur Druckhaltung im Gas-Wasser-Separators 12 geöffnet.

Erfindungsgemäß erfolgt eine Schwerkraftentwässerung. Die treibende Kraft in der in der Figur gezeigten Ausführung ist der Höhenunterschied zw. Kühlvorrichtung 20 und dem Flüssigkeitsspeicher, in diesem Fall dem Gas-Wasser-Separator 12. Die Entleerung erfolgt analog zur forcierten "Entwässerung", dabei wird über das Ventil V5 Gas lediglich zur Vermeidung eines Unterdrucks bzw. zur Aufrechterhaltung eines definierten Überdrucks im System eingeleitet. Vorteilhaft in beiden Ausführungen ist das "Schrägstellen" der Kühlvorrichtung 20, um eine definierte Abfluss- und Einlaufrichtung zu bewirken.

Für beide nachfolgend beschriebenen Ausführungsbeispiele kann das Wiederanfahren bei sehr niedrigen Temperaturen kritisch sein, da bei einem zu langsamen Befüllen die Kühlvorrichtung 20 durch Vereisung in den Kühlkanälen verstopfen kann.

Gemäß einer ersten Ausführung wird der Elektrolyseprozess als Gasgenerator genutzt, um den Druck im Gas-Wasser-Separator 12 und im Gasspeicher 22 zu erhöhen. Ventile V2, V3, V5, V6 und V7 sind geschlossen, während Ventile V1 und V4 geöffnet sind. Das Prozesswasser W zirkuliert dabei in der Bypass-Leitung 24 und wird vorgewärmt. Im Gas-Wasser-Separator 12 und im Gasspeicher 22 wird Gasdruck aufgebaut. Beim Erreichen eines vordefinierten Mindestdrucks öffnet Ventil V2 und das geschlossene Ventil V7 sorgt für eine definierte Druckhaltung. Die Kühlvorrichtung 20 wird befüllt. V7 ist ein Druckhalteventil, das zur Druckentlastung geöffnet wird, den Druckabbau aber bei einem höheren Druck als dem Umgebungsdruck, z.B. 1,5 bar, stoppt.

Alternativ oder ergänzend kann ein Fremddruckbezug vorgesehen sein. Über einen externen, hier nicht gezeigten, Druckgasspeicher erfolgt die Druckbeaufschlagung des Systems über das Öffnen von Ventil V6 und ggf. Ventil V2. Für den Fall, dass in der Kühlvorrichtung ein Gasvolumen eingeschlossen ist, würde es, nach dem Druckaufbau und dem Öffnen von V2, nicht zu einem plötzlichen Druckausgleich kommen können. Das System wird vorgespannt und kann analog, wie bei der oben beschriebenen Eigendruckerzeugung befüllt werden.

Der Gasspeicher 22 kann entfallen, wenn auf eine externe Druckgasversorgung zurückgegriffen werden kann.

Auf der Anodenseite der Elektrolysevorrichtung 2 kann direkt Luft zur Verdrängung genutzt werden. Alternativ, sowohl auf der Katoden- als auch auf der Anodenseite kann auch Stickstoff aus einem Stickstoffsystem zur Verdrängung genutzt werden.

Das Ventil V7 kann zur Entlüftung erforderlich sein, wenn die in geringem Umfang verfrachteten Gasblasen durch die Strömung aus der Kühlvorrichtung 20 nicht ausgetragen werden. Oder optional befindet sich Im Zirkulationssystem ein Ionenaustauscher in Teil- oder Vollstrom.

## Patentansprüche

1. Verfahren zum Betreiben einer Elektrolysevorrichtung (2) zum Zerlegen von Wasser mit folgenden Schritten:
- Bereitstellen wenigstens einer Elektrolyseeinheit (3), umfassend wenigstens eine Elektrolysezelle, mit wenigstens einer Eingangsöffnung (6) für einen ersten Eduktstrom (4) und mit wenigstens einer Ausgangsöffnung (8) für einen ersten Produktstrom (P),
- Herstellen des ersten Produktstroms (P) aus dem ersten Eduktstrom (4) in der Elektrolyseeinheit (3),
- Trennen des Produktstroms (P) in einen Wasserstrom (W) und einen Gasstrom (G),
- Kühlen des Wasserstroms (W), indem er in wenigstens eine Kühlvorrichtung (20) eingeleitet wird, in der die Wärme des Wasserstroms (W) direkt an die Umgebung abgegeben wird, wobei die Kühlvorrichtung in einer schrägen Stellung zwischen Zulaufseite und gegenüber- und tieferliegender Ablaufseite angeordnet ist,
- Unterbrechen der Kühlung des Wasserstroms (W) im Falle eines Abschaltens der Elektrolyseeinheit (3) oder im Stand-By-Betrieb der Elektrolyseeinheit (3), und
- Erfassen der Umgebungstemperatur während des Stillstands oder des Stand-By-Betriebs und wenn die Umgebungstemperatur unterhalb 1 °C ist, Entleeren des Wasserstroms (W) aus der Kühlvorrichtung (20) in einen Flüssigkeitsspeicher, wobei die Kühlvorrichtung (20) durch einen Höhenunterschied zwischen der Kühlvorrichtung (20) und dem Flüssigkeitsspeicher entleert wird.

2. Verfahren nach Anspruch 1,
wobei das Wasser in der entleerten Kühlvorrichtung (20) durch ein Gas ersetzt wird.

3. Verfahren nach Anspruch 1 oder 2,
wobei die Kühlvorrichtung (20) durch Beaufschlagen mit einem unter Druck stehendem Gas entleert wird, welches insbesondere ein Prozessgas ist.

4. Verfahren nach einem der vorhergehenden Ansprüche,
wobei als Flüssigkeitsspeicher ein Gas-Wasser-Separator (12) verwendet wird, in dem im Betrieb die Trennung des Wasserstroms (W) und des Gasstroms (G) erfolgt.

5. Verfahren nach einem der vorhergehenden Ansprüche,
wobei als Flüssigkeitsspeicher ein zusätzlicher Behälter eingesetzt wird.

6. Elektrolysevorrichtung (2) zum Zerlegen von Wasser umfassend:
- eine Elektrolyseeinheit (3), umfassend wenigstens eine Elektrolysezelle, mit wenigstens einer Eingangsöffnung (6) für einen ersten Eduktstrom (4) und mit wenigstens einer Ausgangsöffnung (8) für einen ersten Produktstrom (P),
- wenigstens einen Gas-Wasser-Separator (12) zum Trennen des Produktstroms (P) in einen Wasserstrom (W) und einen Gasstrom (G),
- eine Kühlvorrichtung (20) zum Kühlen des Wasserstroms (W), die für eine direkte Abgabe der Wärme des Wasserstroms (W) an die Umgebung ausgelegt ist, wobei die Kühlvorrichtung in einer schrägen Stellung zwischen Zulaufseite und gegenüber- und tieferliegender Ablaufseite angeordnet ist,
- eine Steuereinheit (5), die dafür ausgebildet ist, die Kühlung des Wasserstroms (W) im Falle eines Abschaltens der Elektrolyseeinheit (3) oder im Stand-By-Betrieb der Elektrolyseeinheit (3) zu unterbrechen, und
- eine Temperaturmessvorrichtung zum Erfassen der Umgebungstemperatur während des Stillstands oder des Stand-By-Betriebs, wobei die Steuereinheit (5) dafür eingerichtet ist, wenn die Umgebungstemperatur unterhalb 1 °C ist, den Wasserstrom (W) aus der Kühlvorrichtung (20) in einen Flüssigkeitsspeicher zu entleeren, wobei die Kühlvorrichtung (20) und der Flüssigkeitsspeicher durch einen Höhenunterschied zwischen der Kühlvorrichtung (20) und dem Flüssigkeitsspeicher angeordnet sind.

## Claims

1. Process for operating an electrolysis apparatus (2) for splitting water comprising the steps of:
- providing at least one electrolysis unit (3) comprising at least one electrolysis cell having at least one inlet opening (6) for a first reactant stream (4) and having at least one outlet opening (8) for a first product stream (P),
- producing the first product stream (P) from the first reactant stream (4) in the electrolysis unit (3),
- separating the product stream (P) into a water stream (W) and a gas stream (G),
- cooling the water stream (W) by introducing it into at least one cooling apparatus (20) in which the heat of the water stream (W) is dissipated directly to the environment, wherein the cooling apparatus is arranged in an inclined orientation between an inflow side and an opposite and lower outflow side,
- interrupting the cooling of the water stream (W) in the case of a shutdown of the electrolysis unit (3) or in standby operation of the electrolysis unit (3), and
- detecting the ambient temperature during the offline state or the standby operation and if the ambient temperature is below 1°C emptying the water stream (W) from the cooling apparatus (20) into a liquid storage means, wherein the cooling apparatus (20) is emptied via a height difference between the cooling apparatus (20) and the liquid storage means.

2. Process according to Claim 1,
wherein the water in the emptied cooling apparatus (20) is replaced by a gas.

3. Process according to Claim 1 or 2,
wherein the cooling apparatus (20) is emptied by pressurizing with a pressurized gas which is especially a process gas.

4. Process according to any of the preceding claims,
wherein the liquid storage means used is a gas-water separator (12) which effects the separation of the water stream (W) and the gas stream (G) in operation.

5. Process according to any of the preceding claims,
wherein the liquid storage means employed is an additional container.

6. Electrolysis apparatus (2) for splitting water comprising:
- an electrolysis unit (3) comprising at least one electrolysis cell having at least one inlet opening (6) for a first reactant stream (4) and having at least one outlet opening (8) for a first product stream (P),
- at least one gas-water separator (12) for separating the product stream (P) into a water stream (W) and a gas stream (G),
- a cooling apparatus (20) for cooling the water stream (W) which is configured for direct dissipation of the heat of the water stream (W) to the environment, wherein the cooling apparatus is arranged in an inclined orientation between an inflow side and an opposite and lower outflow side,
- a control unit (5) configured for interrupting the cooling of the water stream (W) in the case of a shutdown of the electrolysis unit (3) or in standby operation of the electrolysis unit (3), and
- a temperature measuring apparatus for detecting the ambient temperature during the offline state or the standby operation, wherein the control unit (5) is adapted for emptying the water stream (W) from the cooling apparatus (20) into a liquid storage means if the ambient temperature is below 1°C, wherein the cooling apparatus (20) and the liquid storage means are arranged via a height difference between the cooling apparatus (20) and the liquid storage means.

## Revendications

1. Procédé pour faire fonctionner une installation (2) d'électrolyse pour la décomposition de l'eau comprenant les stades suivants :
- on se procure au moins une unité (3) d'électrolyse, comprenant au moins une cellule électrolyse, comprenant au moins une ouverture (6) d'entrée d'un premier courant (4) d'éduit et comprenant au moins une ouverture (8) de sortie d'un premier courant (P) de produit,
- on produit le premier courant (P) de produit à partir du premier courant (4) d'éduit dans l'unité (3) d'électrolyse,
- on sépare le courant (P) de produit en un courant (W) d'eau et en un courant (G) de gaz,
- on refroidit le courant (W) d'eau, en l'envoyant dans au moins une installation (20) de refroidissement, dans laquelle on cède la chaleur du courant (W) d'eau directement à l'atmosphère ambiante, dans lequel l'installation de refroidissement est montée dans une position inclinée entre un côté d'entrée et un côté de sortie opposé et disposé plus bas,
- on interrompt le refroidissement du courant (W) d'eau dans le cas d'une mise hors circuit de l'unité (3) d'électrolyse ou dans le cas d'un fonctionnement de mise en attente de l'unité (3) d'électrolyse, et
- on détecte la température ambiante pendant l'arrêt ou pendant le fonctionnement en attente et, si la température ambiante est en-dessous de 1°C, on vide l'installation (20) de refroidissement du courant (W) d'eau dans un accumulateur de liquide, dans lequel on vide l'installation (20) de refroidissement par une différence de niveau entre l'installation (20) de refroidissement et l'accumulateur de liquide.

2. Procédé suivant la revendication 1,
dans lequel on remplace l'eau dans l'installation (20) de refroidissement vidée par un gaz.

3. Procédé suivant la revendication 1 ou 2,
dans lequel on vide l'installation (20) de refroidissement par alimentation en un gaz sous pression, qui est en particulier un gaz de processus.

4. Procédé suivant l'une des revendications précédentes,
dans lequel on utilise comme accumulateur de liquide un séparateur (12) gaz-eau, dans lequel en fonctionnement a lieu la séparation du courant (W) d'eau et du courant (G) de gaz.

5. Procédé suivant l'une des revendications précédentes,
dans lequel on utilise un récipient supplémentaire comme accumulateur de liquide.

6. Installation (2) d'électrolyse pour la décomposition de l'eau comprenant :
- une unité (3) d'électrolyse, comprenant au moins une cellule d'électrolyse, comprenant au moins une ouverture (6) d'entrée d'un premier courant (4) d'éduit et comprenant au moins une ouverture (8) de sortie d'un premier courant (P) de produit,
- au moins un séparateur (12) gaz-eau pour la séparation du courant (P) de produit en un courant (W) d'eau et en un courant (G) de gaz,
- une installation (20) de refroidissement pour le refroidissement du courant (W) d'eau, qui est conçue pour une cession directe de la chaleur du courant (W) d'eau à l'atmosphère ambiante, dans laquelle l'installation de refroidissement est disposée en une position inclinée entre un côté d'entrée et un côté de sortie opposé et situé plus bas,
- une unité (5) de commande, qui est constituée pour interrompre le refroidissement du courant (W) d'eau dans le cadre d'une mise hors circuit de l'unité (3) d'électrolyse ou d'un fonctionnement en attente de l'unité (3) d'électrolyse, et
- un dispositif de mesure de la température pour la détection de la température ambiante pendant l'arrêt ou la mise en fonctionnement d'attente, dans laquelle l'unité (5) de commande est agencée pour, si la température ambiante est en-dessous de 1°C, vider l'installation (20) de refroidissement du courant (W) d'eau dans un accumulateur à liquide, dans laquelle l'installation (20) de refroidissement et l'accumulateur de liquide sont disposés avec une différence de niveau entre l'installation (20) de refroidissement et l'accumulateur de liquide.
